# EUROPÄISCHE PATENTSCHRIFT

(11) **EP 1 431 452 B1**
(45) Veröffentlichungstag und Bekanntmachung des Hinweises auf die Patenterteilung: **11.08.2010**
(21) Anmeldenummer: 03028601.7
(22) Anmeldetag: 12.12.2003
(51) Int. Cl.: D21F 3/02, D21G 1/02, F16C 13/00

(54) **Vorrichtung zum Bilden eines Langspalts**
Apparatus for the formation of an extended nip
Dispositif pour formation d'une presse à ligne de contact élargie

(30) Priorität: 17.12.2002 DE 10259232
(43) Veröffentlichungstag der Anmeldung: 23.06.2004
(73) Patentinhaber: Andritz Küsters GmbH, 47805 Krefeld (DE)
(72) Erfinder: Hader, Peter, 47906 Kempen (DE); Brendel, Bernhard, Dr., 47929 Grefrath (DE)
(74) Vertreter: Sparing Röhl Henseler Patentanwälte European Patent Attorneys

(56) Entgegenhaltungen:
- EP-A- 0 674 043
- EP-A- 0 818 572
- WO-A-01/04412
- DE-A- 4 311 622
- DE-A- 19 622 018

## Beschreibung

Die Erfindung betrifft eine Vorrichtung zum Bilden eines Langspalts zwischen einer Gegenwalze und einer Schuhwalze zum Behandeln einer Warenbahn gemäß dem Oberbegriff des Anspruchs 1.

Derartige Vorrichtungen finden insbesondere in Pressenpartien und Kalanderanlagen von Papiermaschinen Verwendung. Die Schmierung zwischen dem rotierenden Walzenmantel und dem stehenden Pressschuh erfolgt bei üblichen Betriebsgeschwindigkeiten bevorzugt rein hydrodynamisch. Die hydrodynamische Schmierung zwischen Walzenmantel und Pressschuh wird dadurch erzeugt, daß in Maschinenlaufrichtung gesehen, vor dem Pressschuh Schmieröl gebracht wird, das durch den drehenden Walzenmantel in den Einzugsbereich hineingezogen wird und zwischen Walzenmantel und Pressschuh einen hydrodynamischen Schmierfilm aufbaut. Diese hydrodynamische Schmierung hat den Vorteil, daß der Pressdruckverlauf in Maschinenlaufrichtung vom Einlaufbereich des Pressschuhs aus zunächst kontinuierlich zunimmt und anschließend zum Schuhende hin in einem kürzeren Bereich ebenfalls wiederum kontinuierlich auf Null abgebaut wird. Solche Druckverläufe haben verfahrenstechnische Vorteile beim Entwässerungsvorgang in Pressenpartien und dem Kalandriervorgang. Der Nachteil einer solchen rein hydrodynamischen Schmierung besteht darin, daß der Schmierfilm zwischen Schuh und Mantel bei niedrigen Geschwindigkeiten und hohen Linienlasten, d.h. hohen Flächenpressungen nicht mehr zuverlässig erzeugt wird, mangelhaft ist oder überhaupt nicht zustande kommt. Eine solche Mangelschmierung kann zu einer Mischreibung zwischen Schuh und Walzenmantel führen. Äußere Anzeichen dafür sind zunächst hohe Antriebsleistungen bzw. Antriebsmomente. Die Folge der Mischreibung sind einerseits Verschleißerscheinungen, insbesondere am Walzenmantel, andererseits eine hohe Erwärmung des Walzenmantels, des Pressschuhs und des Schmieröls. Die kann zu einer Zerstörung des Walzenmantels führen.

Diese Nachteile im Betriebsbereich niedriger Geschwindigkeiten und hoher Linienlasten können durch eine zusätzliche hydrostatische Schmierung vermieden werden. Dabei werden in die Lauffläche des Pressschuhs Öltaschen eingebracht, die mit zusätzlichem Schmieröl versorgt werden. Diese Zufuhr von Schmieröl gewährleistet zwar die Schmierfunktion bei allen Betriebsparametern, bedingt jedoch einen höheren Aufwand in Konstruktion und Fertigung und stellt insbesondere hohe Anforderungen an die Druckölsteuerung. Aus der DE 43 11 622 A1 ist dazu bekannt, den Schuh in seiner Oberfläche in Maschinenlaufrichtung mit Ausnehmungen, d.h. Zonen unterschiedlichen Abstandes von der Gegenwalze, zu versehen, die zum Aufbau eines hydrostatischen Druckkissens dienen, aber frei sind von jeglichen externen Zuund Abfuhrleitungen. Der umlaufende Mantel oder das umlaufende Band schleppt Schmieröl in diese Ausnehmungen, so daß im Bereich dieser Zonen der Schmierölfilm damit eine größere Dicke aufweist. Das eingeschleppte Öl verbleibt in der Regel in diesen Zonen, so daß bei geringer Betriebsgeschwindigkeit, bei der der Ölfilm eines hydrodynamischen Schuhs kleiner wird, da weniger Öl vom umlaufenden Mantel mitgeführt wird, im Bereich der Taschen ein Aufreißen des Schmierfilms weitgehendst vermieden werden kann. Nachteilig hierbei ist jedoch, die Beeinflussung des erzeugten Druckprofils durch die Ausnehmungen, als auch die Abhängigkeit der Funktionstüchtigkeit der hydrostatischen Schmierung von der hydrodynamischen Schmierung.

Aus EP 0 674 043 A1 ist eine Vorrichtung zur Behandlung einer Faserstoffbahn mit einem verlängerten Preßspalt bekannt. Zumindest eine Preßfläche wird von einem Band gebildet, das über eine hydraulische Anpreßvorrichtung, bestehend aus mindestens einem Stützelement mit jeweils mindestens einer Kolben-Zylinder-Einheit, mit Druck beaufschlagt wird.

Die Schmierung des Bandes kann dabei hydrodynamisch und/oder hydrostatisch über die Anpreßvorrichtung erfolgen. Sofern eine hydrostatische Schmierung erfolgt, werden die in der zum Band gerichteten Lauffläche des Stützelements vorhandenen Lagertaschen über eine Verbindung mit den Druckräumen der Kolben-Zylinder-Einheit versorgt.

Sollte es durch das bei unregelmäßigen Bahnverdickungen zu beobachtende Eindrücken des Bandes in die Lagertaschen zu einer Beschädigung des Bandes kommen, so ist es von Vorteil, die Lagertaschen durch eine oder mehrere von der Lauffläche des Stützelements ausgehende und mit dem jeweiligen Druckraum verbundene Bohrungen zu ersetzen.

Aufgabe der Erfindung ist es daher, eine Vorrichtung zum Bilden eines Langspalts nach dem Oberbegriff des Anspruchs 1 zu schaffen, die eine zuverlässige Schmierung in allen Geschwindigkeits- und Linienkraftbereichen erlaubt.

Diese Aufgabe wird durch die Merkmale des kennzeichnenden Teils des Anspruchs 1 gelöst.

Hierdurch wird eine Vorrichtung zum Bilden eines Langspalts geschaffen, bei der die Nachteile im Betriebsbereich niedriger Geschwindigkeiten und hoher Linienlasten durch eine Zusatzschmierung vermieden werden, die Vorteile der hydrodynamischen Schmierung aber nicht aufgegeben werden. Es wird nicht eine zusätzliche hydrostatische Schmierung aufgebaut, sondern ausschließlich eine hydrodynamische Schmierung eingestellt. Das durch die Bohrungen austretende Schmieröl kann dabei als alleinige Schuhschmierung oder als zusätzliche Schuhschmierung zusammen mit einer Schmierölversorgung am Schuheinlauf arbeiten. Das für die Entwässerung optimale hydrodynamische Druckprofil bleibt erhalten. Die gedrosselten Bohrungen treten direkt an der Schuhoberfläche aus, so daß sich kein Bereich hydrostatischer Schmierung bilden kann. Über eine Dimensionierung der Drosseln kann der erforderliche Druckabfall eingestellt werden.

Vorzugsweise wird das durch die Bohrungen austretende Schmieröl an einer Stelle des Schuhs in Maschinenlaufrichtung zugeführt, bei der es dem Schmieröl schwerer fällt entgegen der Maschinenlaufrichtung des Walzenmantels zurückzuströmen, als mit dem Walzenmantel in Maschinenlaufrichtung mittransportiert zu werden und so zum Aufbau der hydrodynamischen Schmierung beizutragen. Dies ist vorzugsweise dann der Fall, wenn die Bohrungen in einer ersten Schuhhälfte in Maschinenlaufrichtung, insbesondere einem ersten Drittel des Schuhs, angebracht sind. Dies bedeutet, daß die Ölzufuhr dann in einem Bereich erfolgt, in dem der hydrodynamische Druck erst aufgebaut wird und damit noch einen deutlich niedrigeren Wert aufweist als im Bereich einer zweiten Schuhhälfte mit einem maximalen Schuhdruck. Es ist nur ein geringer Druck und damit eine geringe Pumpenleistung nötig, um das Öl an die Schmierstelle zu befördern.

Das durch die Bohrungen austretende Schmieröl wird vorzugsweise über Bohrungen kleiner Durchmesser, wie beispielsweise im Bereich von 0,5 mm bis 2,5 mm, an die Schuhoberfläche geführt. Die Ölzufuhr in solchen Bohrungen ist so stark gedrosselt, daß trotz möglicher Druckunterschiede im Schuh in Maschinenquerrichtung, insbesondere bei Druckabfällen an den Schuhenden, wegen eines seitlichen Ölaustritts am Schuh sowie wegen eventueller Profilkorrekturen an den Schuhrändern in Maschinenquerrichtung, stets Öl an allen Bohrungen der Zusatzschmierung austritt, insbesondere auch an Stellen höheren Drucks. Einen Ölaustritt an den Bohrungen bei örtlich höheren Schuhdrücken ist besonders vorteilhaft, und kann durch eine wählbare Drosseldimensionierung sichergestellt werden, so daß Schmieröl auf der Lauffläche nicht rückwärts über die Bohrungen in eine Zulaufleitung zurückströmt, und dann, wenn die Bohrungen miteinander kommunizieren, an Stellen niedrigeren Schuhdrucks als weiteres zusätzliches Schmieröl austritt.

Die Austrittsöffnungen der Bohrungen können über die gesamte Schubbreite quer zur Maschinenlaufrichtung verteilt angeordnet sein oder auch nur in bestimmten Bereichen, insbesondere den Randbereichen des Schuhs, um dort eine Mangelschmierung zu vermeiden. Weiterhin können mehrere Reihen von Austrittsöffnungen der Bohrungen in Maschinenlaufrichtung hintereinander angeordnet werden, beispielsweise eine durchgehende Reihe entlang der Schuhbreite und je eine zusätzliche Reihe jeweils im Randbereich des Schuhs.

Bevorzugt ist, die Austrittsöffnungen der Bohrungen in ihren Bereichen in gleichmäßigen Abständen anzubringen.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch im Querschnitt eine Gegenwalze und eine Schuhwalze einer Vorrichtung zum Bilden eines Langspalts gemäß einem ersten Ausführungsbeispiel,
Fig. 2 zeigt schematisch eine Draufsicht eines Preßschuhs der Schuhwalze gemäß Fig. 1,
Fig. 3 zeigt schematisch einen Schnitt A - A der Fig. 2,
Fig. 4 zeigt schematisch im Querschnitt ein Teilstück eines Preßschuhs einer Schuhwalze einer Vorrichtung zum Bilden eines Langspalts gemäß einem zweiten Ausführungsbeispiel.

Die Erfindung betrifft eine Vorrichtung zum Bilden eines Langspalts zwischen einer Gegenwalze 1 und einer Schuhwalze 2 zum Behandeln einer Warenbahn 3, insbesondere einer Papierbahn. Derartige Vorrichtungen finden in Pressenpartien zum Entwässern einer Faserstoffbahn, als auch in Trockenpartien und Kalanderanlagen von Papiermaschinen Verwendung.

Die Gegenwalze 1 wird angetrieben, um die Warenbahn 3 in einer Maschinenlaufrichtung durch einen Preßspalt 4 zwischen der Gegenwalze 1 und der Schuhwalze 2 zu transportieren. Die Schuhwalze 2 umfaßt einen nur teilweise dargestellten feststehenden Träger 5 und einen um den Träger 5 drehbaren Walzenmantel 6, der aus einem flexiblen Material, z. B. Gummi oder Kunststoff, besteht. Der Walzenmantel 6 ist schlauchförmig ausgebildet und mit seinen Enden an drehbar auf dem Träger 5 sitzenden Deckeln (nicht dargestellt) in bekannter Weise befestigt, um eine geschlossene Langspaltvorrichtung zu bilden. Einem Zwischenraum 7 zwischen Träger 5 und Walzenmantel 6 kann Druckluft zugeführt werden, wodurch der Walzenmantel 7 aufgeblasen werden kann, um eine zylindrische Form zu erhalten und/oder ein Flattern des Walzenmantels 6 im Betrieb zu vermeiden.

An dem Träger 5 ist ein Preßschuh 8 vorgesehen, der an dem Träger 5 geführt ist und sich an diesem abstützt. Der Preßschuh 8 ist mit einer Lauffläche 9 einer Innenseite 10 des Walzenmantels 6 zugewandt und gegen diese preßbar, um mit der Gegenwalze 1 eine verlängerte Preßzone mit einer wählbaren Linienlast auszubilden. Durch Beaufschlagung einer Preßkammer 11 kann der Preßschuh 8 gegen die Gegenwalze 1 gepreßt werden. Die Preßkammer 11 ist durch Dichtungen 12 begrenzt und über eine Zuleitung 13 mit einem Druckmittel speisbar.

Die Lauffläche 9 des Preßschuhs 8 wird hydrodynamisch geschmiert, wozu eine erste Einrichtung 14 zum Auftragen von Schmiermittel auf die Innenseite 10 des Walzenmantels 6 vorgesehen ist. Aus einem Schmierölreservoir 15 wird über eine Pumpe 16 und ein Druckregelventil 17 eine Zuleitung 18 gespeist, die die Einrichtung 14 zum Auftragen von Schmiermittel versorgt.

Dem zwischen dem Walzenmantel 6 und der Lauffläche 9 gebildeten Schmierspalt der hydrodynamisch geschmierten Schuhwalze 2 wird zusätzliches Schmieröl zugeführt, wozu der Preßschuh 8 in einem Einlaufbereich eine Mehrzahl quer zur Maschinenlaufrichtung angeordnete Bohrungen 19 aufweist, die für eine Speisung mit Schmiermittel an eine Schmiermittelversorgung 20 angeschlossen sind und mit Austrittsöffnungen 21 an der Lauffläche 9 enden. Die Bohrungen 19 umfassen Drosseln, deren Drosselwiderstand für einen Druckabfall von 5 bis 15 bar ausgelegt ist.

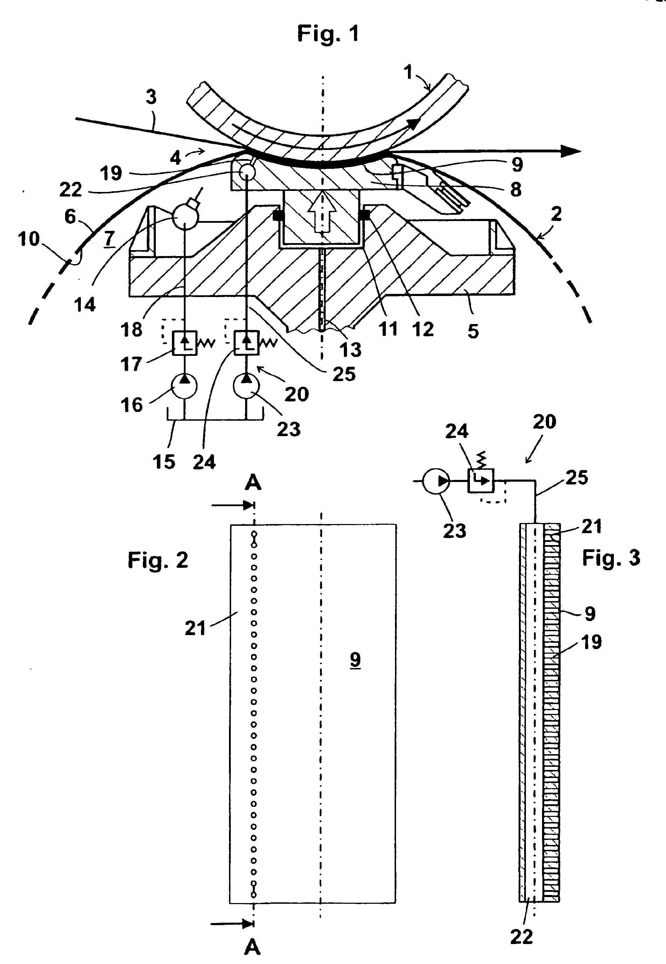

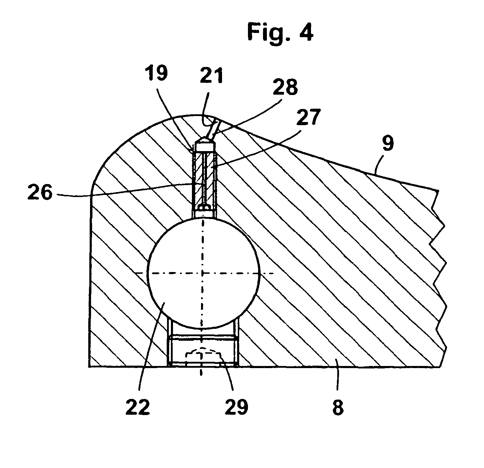

Bei dem in den Figuren 1 bis 3 dargestellten Ausführungsbeispiel, das einen Kalanderpress-Spalt darstellt, bilden die Bohrungen 19 zugleich die Drosseln, d.h. sie sind als Drosselbohrungen ausgeführt, während bei dem in Fig. 4 dargestellten zweiten Ausführungsbeispiel die Drosseln als Drosseleinsätze 26 ausgebildet sind.

Wie die Figuren 2 und 3 zeigen, treten die Bohrungen 19 mit ihren Austrittsöffnungen 21 direkt an der Lauffläche 9 aus. Die Bohrungen 19 sind mit ihren Austrittsöffnungen 21 in einer ersten Hälfte des Schuhs 8 in Maschinenlaufrichtung quer zu dieser angebracht. Vorzugsweise sind die Bohrungen 19 mit ihren Austrittsöffnungen 21 in einem ersten Drittel des Schuhs 8 in Maschinenlaufrichtung angebracht und besonders bevorzugt in einem Bereich, wo der Preßdruck aus einem Bereich mit hoher Preßdrucksteigerung in einen Bereich mit niedriger Preßdrucksteigerung übergeht.

Die Bohrungen 19 können als Normbohrungen mit einem konstanten Durchmesser ausgebildet sein, wie dies in Fig. 3 dargestellt ist. Die Bohrungen 19 können mit ihren Austrittsöffnungen verteilt über die gesamte Schuhbreite quer zur Maschinenlaufrichtung aus der Lauffläche 9 austreten, wie dies Fig. 2 zeigt. Die Austrittsöffnungen 21 sind hier in einer durchgehenden Reihe angeordnet. Alternativ können die Austrittsöffnungen 21 zueinander versetzt sein oder nur in den Randbereichen der Lauffläche 9 oder in zwei oder mehreren Reihen hintereinander in Maschinenlaufrichtung angeordnet sein.

Die Bohrungen 19 kommunizieren miteinander, wozu sie vorzugsweise über eine senkrecht zu ihnen stehende Querbohrung 22 mit Schmiermittel gleichzeitig speisbar sind. An die Querbohrung 22 ist die Schmiermittelversorgung 20 angeschlossen.

Bevorzugt sind die Bohrungen 19 mit ihren Austrittsöffnungen in ihrem Bereich oder Bereichen in gleichmäßigen Abständen angebracht. Die Lochabstände liegen vorzugsweise im Bereich zwischen 15 und 25 mm.

Die Dimensionierung der Drosseln ist derart, daß die Ölzufuhr in den Bohrungen 19 so stark gedrosselt ist, daß trotz möglicher Druckunterschiede am Schuh 8 in Maschinenlaufrichtung stets Öl an allen Bohrungen 19 der Zusatzschmierung austritt, insbesondere auch an Stellen höheren Preßdrucks.

Bei dem ersten Ausführungsbeispiel, wo die Bohrungen 19 als Drosselbohrungen ausgebildet sind, liegt deren Durchmesser im Bereich von 0,5 bis 2,5 mm, bei einer Länge der Drosselbohrungen im Bereich von 10 bis 30 mm, um einen Druckabfall von 5 bis 15 bar, insbesondere 8 bis 12 bar, zu erreichen. Alternativ können die Austrittsöffnungen 21 der Bohrungen 19 einen größeren Austrittsquerschnitt besitzen, der jedoch vorzugsweise unter 4 mm liegt.

Wie in Fig. 1 bis 3 dargestellt, erfolgt die Zufuhr über eine zusätzliche Pumpe 23, die in ihrem Druck oder ihrer Fördermenge von außen über ein Druckregelventil 24 getrennt geregeltwird, allerdings aus dem gleichen Schmiermittelreservoir 15 schöpft, wie die Einrichtung 14. Man hat so die Möglichkeit über eine Zuleitung 25 die Fördermenge zur Ausbildung eines optimalen Schmierfilms für jeden Betriebszustand einzustellen.

Das in Fig. 4 dargestellte zweite Ausführungsbeispiel unterscheidet sich von dem zuvor beschriebenen Ausführungsbeispiel lediglich dadurch, daß Drosseleinsätze 26 in die Bohrung 19 eingesetzt sind, wozu die Bohrungen 19 jeweils einen Drosseleinsatzabschnitt 27 und einen Endabschnitt 28 aufweisen. Der Endabschnitt 28 der Bohrung 19 endet mit der Austrittsöffnung 21 an der Lauffläche 9 und ist mit seiner Dimensionierung an die Dimensionierung des Drosseleinsatzes 26 angepaßt. Der Durchmesser der Bohrung 19 in dem Endabschnitt 28 kann größer sein als der des Drosseleinsatzes 26, da aus Fertigungsgründen das Anbringen der Endabschnitte 28 mit einem Durchmesser kleiner 2 mm erschwert ist. Die Endabschnitte 28 besitzen vorzugsweise Durchmesser zwischen 2 und 4 mm. Der Endabschnitt 28 der Bohrungen 19 verläuft vorzugsweise jeweils senkrecht zur Lauffläche 9. Zur Anbringung des Drosseleinsatzabschnitts 27 der Bohrung 19 ist eine mit einem Stopfen 29 versehene Öffnung im Bodenbereich des Schuhs 8 vorgesehen, der vorzugsweise senkrecht zur Bodenfläche des Schuhs verläuft. Der Drosseleinsatz 26 ergibt zusammen mit dem Endabschnitt 27 der Bohrung einen Druckabfall im Bereich von 5 bis 15 bar, wozu der Drosseleinsatz 26 hinsichtlich Durchmesser und Länge entsprechend zu dimensionieren ist.

Im übrigen gelten die Ausführungen zum ersten Ausführungsbeispiel hier entsprechend.

Gemäß einem weiteren nicht dargestellten Ausführungsbeispiel der Erfindung wird das durch die Bohrungen 19 austretende Schmieröl als alleinige Schmierölzufuhr verwendet. Die gemäß erstem Ausführungsbeispiel beschriebene Schmierölzufuhr über die Bohrungen 19 im Preßschuh 8, die an eine Schmierölversorgung 20 angeschlossen ist, dient dann als einzige Einrichtung zum Auftragen von Schmiermittel auf die Innenseite des Walzenmantels 6, und zwar im Preßschuhbereich, während die erste Einrichtung 14 für die Schmiermittelzufuhr wegfallen kann.

## Patentansprüche

1. Vorrichtung zum Bilden eines Langspalts zwischen einer Gegenwalze (1) und einer Schuhwalze (2) zum Behandeln einer Warenbahn (3), wobei die Schuhwalze (2) einen feststehenden Träger (5) und einen um den Träger (5) drehbaren, flexiblen Walzenmantel (6) aufweist, der im Bereich des Langspalts auf einer hydrodynamisch geschmierten Lauffläche (9) eines am Träger (5) geführten Preßschuh (8) abgestützt ist, wozu eine Einrichtung (21) zum Auftragen von Schmiermittel auf die Innenseite (10) des Walzenmantels (6) vorgesehen ist, der Preßschuh (8) in einem Einlaufbereich eine Mehrzahl quer zur Maschinenlaufrichtung angeordnete Bohrungen (19) aufweist, die für eine Speisung mit Schmiermittel an eine Schmiermittelversorgung (20) angeschlossen sind und dazu an der Lauffläche (9) enden, **dadurch gekennzeichnet, daß** die Bohrungen (19) Drosseln umfassen, deren Drosselwiderstand für einen Druckabfall von 5 bis 15 bar ausgelegt ist und die Schmiermittelversorgung (20) von außen über ein Druckregelventil (24) getrennt geregelt ist.

2. Vorrichtung nach Anspruch 1, **dadurch gekennzeichnet, daß** die Bohrungen (19) über eine senkrecht zu ihnen stehende Querbohrung (22) mit Schmiermittel speisbar sind.

3. Vorrichtung nach Anspruch 1 oder 2, **dadurch gekennzeichnet, daß** die Drosseln von den als Drosselbohrungen ausgebildeten Bohrungen (19) gebildet werden.

4. Vorrichtung nach Anspruch 1 oder 2, **dadurch gekennzeichnet, daß** die Drosseln von Drosseleinsätzen (26) gebildet werden.

5. Vorrichtung nach einem der Ansprüche 1 bis 4, **dadurch gekennzeichnet, daß** die Drosseln einen Durchmesser im Bereich von 0,5 mm bis 2,5 mm und eine Länge im Bereich von 10 bis 30 mm aufweisen.

6. Vorrichtung nach einem der Ansprüche 1 bis 5, **dadurch gekennzeichnet, daß** die Bohrungen (19) eine Austrittsöffnung (21) besitzen, die unter 4 mm liegt.

7. Vorrichtung nach einem der Ansprüche 1 bis 6, **dadurch gekennzeichnet, daß** die Bohrungen (19) jeweils einen Drosseleinsatz aufweisen, dessen Durchmesser geringer ist als die Austrittsöffnung (21) der Bohrung (19) an der Lauffläche (9).

8. Vorrichtung nach einem der Ansprüche 1 bis 7, **dadurch gekennzeichnet, daß** der Drosselwiderstand der Drosseln für einen Druckabfall von 8 bis 12 bar ausgelegt ist.

9. Vorrichtung nach einem der Ansprüche 1 bis 8, **dadurch gekennzeichnet, daß** der Lochabstand der Austrittsöffnungen (21) der Bohrungen (19) an der Lauffläche (9) im Bereich zwischen 15 und 25 mm liegt.

10. Vorrichtung nach einem der Ansprüche 1 bis 9, **dadurch gekennzeichnet, daß** die Bohrungen (19) mit ihren Austrittsöffnungen (21) in einer ersten Schuhhälfte in Maschinenlaufrichtung angebracht sind.

11. Vorrichtung nach einem der Ansprüche 1 bis 10, **dadurch gekennzeichnet, daß** die Bohrungen (19) mit ihren Austrittsöffnungen (21) in einem ersten Drittel des Schuhs (8) in Maschinenlaufrichtung angeordnet sind.

12. Vorrichtung nach einem der Ansprüche 1 bis 9, **dadurch gekennzeichnet, daß** die Bohrungen (19) mit ihren Austrittsöffnungen (21) in einem Einlaufbereich des Schuhs (8) angeordnet sind, wo der Preßdruck aus einem Bereich mit hoher Preßdrucksteigerung in einen Bereich mit niedriger Preßdrucksteigerung übergeht.

13. Vorrichtung nach einem der Ansprüche 1 bis 12, **dadurch gekennzeichnet, daß** eine erste Einrichtung (14) zum Auftragen von Schmiermittel auf die Innenseite des Walzenmantels (6) vor einem Schuheinlauf angeordnet ist.

14. Vorrichtung nach Anspruch 13, **dadurch gekennzeichnet, daß** die erste Einrichtung (14) und die Bohrungen (19) aus einem Schmierölverservoir (15) gespeist werden.

15. Vorrichtung nach einem der Ansprüche 1 bis 14, **dadurch gekennzeichnet, daß** mehrere Reihen von Austrittsöffnungen (21) der Bohrungen (19) in Maschinenlaufrichtung hintereinander angeordnet sind.

## Claims

1. Apparatus for forming an extended nip between a mating roll (1) and a shoe roll (2) for treating a product web (3), the shoe roll (2) having a stationary carrier (5) and a flexible roll shell (6) which can rotate about the carrier (5) and which, in the region of the extended nip, is supported on a hydrodynamically lubricated running surface (9) of a press shoe (8) guided on the carrier (5), for which purpose a device (21) for applying lubricant to the inner side (10) of the roll shell (6) is provided, in an inlet region, the press shoe (8) has a plurality of holes (19) which are arranged transversely with respect to the machine running direction, are connected to a lubricant supply (20) in order to be fed with lubricant and, for this purpose, end at the running surface (9), **characterized in that** the holes (19) comprise restrictors whose resistance is designed for a pressure drop of 5 to 15 bar, and the lubricant supply (20) is regulated separately from the outside via a pressure regulating valve (24).

2. Apparatus according to claim 1, **characterized in that** the holes (19) can be fed with lubricant via a transverse bore (22) at right angles to them.

3. Apparatus according to claim 1 or 2, **characterized in that** the restrictors are formed by the holes (19) designed as restrictor holes.

4. Apparatus according to claim 1 or 2, **characterized in that** the restrictors are formed by restrictor inserts (26).

5. Apparatus according to one of claims 1 to 4, **characterized in that** the restrictors have a diameter in the range from 0,5 mm to 2,5 mm and a length in the range from 10 to 30 mm.

6. Apparatus according to one of claims 1 to 5, **characterized in that** the holes (19) have an outlet opening (21) which is less than 4 mm.

7. Apparatus according to one of claims 1 to 6, **characterized in that** the holes (19) in each case have a restrictor insert whose diameter is smaller than the outlet opening (21) of the hole (19) at the running surface (9).

8. Apparatus according to one of claims 1 to 7, **characterized in that** the resistance of the restrictors is designed for a pressure drop of 8 to 12 bar.

9. Apparatus according to one of claims 1 to 8, **characterized in that** the hole spacing of the outlet openings (21) of the holes (19) at the running surface (9) lies in the range between 15 and 25 mm.

10. Apparatus according to one of claims 1 to 9, **characterized in that** the holes (19) are made with their outlet openings (21) in a first half of the shoe in the machine running direction.

11. Apparatus according to one of claims 1 to 10, **characterized in that** the holes (19) are arranged with their outlet openings (21) in a first third of the shoe (8) in the machine running direction.

12. Apparatus according to one of claims 1 to 9, **characterized in that** the holes (19) are arranged with their outlet openings (21) in an inlet region of the shoe (8), where the pressing pressure changes from a region with a high pressing pressure slope into a region with a low pressing pressure slope.

13. Apparatus according to one of claims 1 to 12, **characterized in that** a first device (14) for applying lubricant to the inner side of the roll shell (6) is arranged upstream of a shoe inlet.

14. Apparatus according to claim 13, **characterized in that** the first device (14) and the holes (19) are fed from one lubricating oil reservoir (15).

15. Apparatus according to one of claims 1 to 14, **characterized in that** a plurality of rows of outlet openings (21) of the holes (19) are arranged one after another in the machine running direction.

## Revendications

1. Dispositif pour formation d'une presse à ligne de contact élargie entre un contre-rouleau (1) et un rouleau support (2) pour le traitement d'une bande de feuilles (3), le rouleau support (2) présentant un support fixe (5) et une gaine (6) flexible rotative autour du support (5), qui s'appuie sur une surface de roulement (9) d'un sabot de compression (8) monté sur le support (5), lubrifiée hydrodynamiquement au niveau de la ligne de contact élargie, et pour laquelle est prévu un appareillage (21) d'application de moyens de lubrification sur la face interne (10) de la gaine (6), le sabot de compression (8) présentant une pluralité d'orifices (19) disposés dans un domaine d'entrée, transversalement par rapport au sens de marche de la machine, les orifices (19) étant reliés à des moyens d'approvisionnement de moyens lubrifiants (20) pour l'alimentation en moyens lubrifiants et se terminant de plus au niveau de la surface de roulement (9), **caractérisé en ce que** les orifices (19) comprennent des moyens d'étranglement, dont la résistance est agencée pour une chute de pression de 5 à 15 bars, et **en ce que** les moyens d'approvisionnement de moyens lubrifiants (20) sont régulés séparément depuis l'extérieur par une soupape de régulation de pression (24).

2. Dispositif selon la revendication 1, **caractérisé en ce que** les orifices (19) peuvent être alimentés par des moyens lubrifiants via un orifice transversal (22) qui leur est perpendiculaire.

3. Dispositif selon la revendication 1 ou 2, **caractérisé en ce que** les moyens d'étranglement sont formés par les orifices (19), agencés en tant qu'orifices restricteurs.

4. Dispositif selon la revendication 1 ou 2, **caractérisé en ce que** les moyens d'étranglement sont formés par des inserts d'étranglement (26).

5. Dispositif selon l'une des revendications 1 à 4, **caractérisé en ce que** les moyens d'étranglement présentent un diamètre compris entre 0,5 et 2,5 mm et une longueur comprise entre 10 et 30 mm.

6. Dispositif selon l'une des revendications 1 à 5, **caractérisé en ce que** les orifices (19) possèdent une ouverture de sortie (21) située en deçà de 4mm.

7. Dispositif selon l'une des revendications 1 à 6, **caractérisé en ce que** les orifices (19) présentent chacun un insert d'étranglement, dont le diamètre est plus petit que l'ouverture de sortie (21) de l'orifice (19) au niveau la surface de roulement (9).

8. Dispositif selon l'une des revendications 1 à 7, **caractérisé en ce que** la résistance des moyens d'étranglement est agencée pour une chute de pression de 8 à 12 bars.

9. Dispositif selon l'une des revendications 1 à 8, **caractérisé en ce que** la distance entre les trous des ouvertures de sortie (21) des orifices (19) est comprise entre 15 et 25 mm au niveau la surface de roulement (9).

10. Dispositif selon l'une des revendications 1 à 9, **caractérisé en ce que** les orifices (19) sont logés avec leurs ouvertures de sortie (21) dans une première moitié du support dans le sens de marche de la machine.

11. Dispositif selon l'une des revendications 1 à 10, **caractérisé en ce que** les orifices (19) sont disposés avec leurs ouvertures de sortie (21) dans un premier tiers du sabot (8) dans le sens de marche de la machine.

12. Dispositif selon l'une des revendications 1 à 9, **caractérisé en ce que** les orifices (19) sont disposés avec leurs ouvertures de sortie (21) dans un domaine d'entrée du sabot (8), où la pression de pressage passe d'un domaine de forte augmentation de pression à un domaine de plus faible augmentation de pression.

13. Dispositif selon l'une des revendications 1 à 12, **caractérisé en ce qu'**un premier appareillage (14) est agencé pour appliquer des moyens lubrifiants sur la face interne de la gaine (6) avant que celle-ci n'entre en contact avec le sabot.

14. Dispositif selon la revendication 13, **caractérisé en ce que** le premier appareillage (14) et les orifices (19) sont alimentés par un réservoir d'huile lubrifiante (15).

15. Dispositif selon l'une des revendications 1 à 14, **caractérisé en ce que** plusieurs séries d'ouvertures de sortie (21) des orifices (19) sont disposées l'une derrière l'autre dans le sens de marche de la machine.
